(19) Europäisches Patentamt
European Patent Office
Office européen des brevets

(11) **EP 3 292 384 B1**

(12) **FASCICULE DE BREVET EUROPEEN**

(45) Date de publication et mention
de la délivrance du brevet:
**16.12.2020 Bulletin 2020/51**

(21) Numéro de dépôt: **16725191.7**

(22) Date de dépôt: **04.05.2016**

(51) Int Cl.:
*G01H 1/00* (2006.01)          *G01H 3/14* (2006.01)
*G01M 1/14* (2006.01)          *G01M 15/12* (2006.01)
*B64D 45/00* (2006.01)          *G01M 15/14* (2006.01)
*G05B 23/02* (2006.01)

(86) Numéro de dépôt international:
**PCT/FR2016/051051**

(87) Numéro de publication internationale:
**WO 2016/177971 (10.11.2016 Gazette 2016/45)**

(54) **PROCÉDÉ DE SURVEILLANCE D'UN MOTEUR D'AÉRONEF EN FONCTIONNEMENT PENDANT UN VOL**

VERFAHREN ZUR ÜBERWACHUNG EINES SICH IM BETRIEB BEFINDENDEN FLUGZEUGMOTORS WÄHREND EINES FLUGS

METHOD FOR MONITORING AN AIRCRAFT ENGINE IN OPERATION DURING A FLIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2015 FR 1554013**

(43) Date de publication de la demande:
**14.03.2018 Bulletin 2018/11**

(73) Titulaire: **SAFRAN AIRCRAFT ENGINES**
**75015 Paris (FR)**

(72) Inventeurs:
• COUPARD, Josselin
77550 Moissy-cramayel Cedex (FR)
• CASTREC, Ronan, Louis
77550 Moissy-cramayel Cedex (FR)
• ZOUARI, Rafik
77550 Moissy-Cramayel Cedex (FR)

(74) Mandataire: **Regimbeau**
**87 rue de Sèze**
**69477 Lyon Cedex 06 (FR)**

(56) Documents cités:
EP-A1- 1 367 226          WO-A1-95/34871
FR-A1- 2 941 049          FR-A1- 2 947 335
US-A- 4 098 127          US-A1- 2005 149 234
US-B1- 9 587 512

• Omar Djebili: "Contribution à la maintenance prédictive par analyse vibratoire des composants mécaniques tournants. Application aux butées à billes soumises à la fatigue de contact de roulement", , 26 septembre 2013 (2013-09-26), XP055254003, Extrait de l'Internet: URL:http://www.theses.fr/2013REIMS030.pdf [extrait le 2016-02-29]

**Description**

DOMAINE TECHNIQUE GENERAL

La présente invention concerne le domaine de la maintenance des équipements aéronautiques.

Plus précisément, elle concerne un procédé d'estimation du caractère normal ou non d'une valeur mesurée d'un paramètre physique d'un moteur.

ETAT DE L'ART

Une turbomachine d'aéronef peut être composée de deux parties rotatives qui avec le temps et les évènements d'exploitation de ladite turbomachine peuvent voir apparaitre un balourd pendant leurs phases de rotation. Le balourd apparu se modélise notamment par une masse annexe positionnée de façon virtuelle sur un point situé en dehors de l'axe de rotation des deux parties rotatives.

La masse annexe, appelée par extension le balourd, génère une force centrifuge non compensée qui « tourne » et provoque une vibration désagréable voire dangereuse pour l'intégrité du moteur si elle est trop forte.

Ce problème peut être corrigé par un équilibrage au sol du moteur, qui consiste en l'installation de masselottes de sorte à compenser le balourd apparu par un nouveau balourd opposé. Il s'agit d'une opération manuelle complexe qui demande une très grande précision, et qui est effectuée lors des visites de révision de la turbomachine.

La difficulté technique provient du fait qu'actuellement, il n'y a pas de façon d'anticiper qu'un équilibrage doit être réalisé, et aucun retour sur la qualité de l'équilibrage réalisé. Une alerte « vibratoire » transmise au cockpit est le seul indicateur qui permet d'alerter l'opérateur qu'il est nécessaire de corriger un mauvais équilibrage.

En d'autres termes, les équilibrages sont soit réalisés de façon systématique lors des opérations de maintenance, soit suite à une alerte vibratoire cockpit.

Il serait donc souhaitable de disposer d'une façon fiable, efficace, et reproductible de surveiller un moteur de sorte à permettre de planifier un prochain équilibrage, ou si un équilibrage vient d'être fait, d'estimer sa qualité

Les documents FR2941049 A1 et WO95/34371 A1 divulguent chacun un procédé de surveillance d'un moteur d'aéronef en fonctionnement pendant un vol.

PRESENTATION DE L'INVENTION

La présente invention propose selon un premier aspect un procédé de surveillance d'un moteur d'aéronef en fonctionnement pendant un vol, le procédé étant caractérisé en ce qu'il comprend la mise en œuvre d'étapes de

(a) Pour au moins une fréquence caractéristique du fonctionnement du moteur, mesure par un capteur disposé dans le moteur d'au moins une valeur de niveau vibratoire synchrone à ladite fréquence caractéristique ;

(b) Pour au moins un module dudit moteur, estimation par des moyens de traitement de données d'une valeur de balourd dudit module en fonction de la ou les valeurs de niveau vibratoires mesurées et d'au moins un coefficient de sensibilité dudit module associé à ladite fréquence caractéristique, ledit coefficient de sensibilité étant un paramètre prédéterminé et adimensionnel reflétant l'impact perceptif des vibrations dues à un balourd sur les personnes ou objets transportés par l'aéronef ;

(c) Estimation par les moyens de traitement de données d'une marge d'équilibrage dudit module en fonction de la valeur de balourd dudit module et d'un seuil maximal associé au module ;

(d) Estimation d'un nombre restant de vols dudit aéronef avant équilibrage et/ou d'un indicateur de qualité d'un équilibrage précédent en fonction de la ou les marges d'équilibrage estimées et de données représentatives d'équilibrages passés du moteur stockées dans une base de données stockée sur des moyens de stockage de données, et transmission à des moyens d'interface.

Selon d'autres caractéristiques avantageuses et non limitatives :

- l'étape (a) comprend la mesure préalable par un autre capteur disposé dans le moteur d'au moins une fréquence caractéristique du fonctionnement du moteur ;
- ledit moteur est un moteur au moins double corps présentant au moins deux fréquences caractéristiques dont une fréquence Basse Pression (BP) et une fréquence Haute Pression (HP), chaque équilibrage étant un équilibrage Basse Pression et/ou un équilibrage Haute Pression ;

- la fréquence BP est la fréquence de rotation d'un ensemble Basse Pression du moteur et la fréquence HP est la fréquence de rotation d'un ensemble Haute Pression du moteur ;

- chaque module du moteur est associé à l'ensemble Haute Pression ou à l'ensemble Basse Pression, et choisi parmi une soufflante, au moins une turbine, et au moins un compresseur ;
- chaque équilibrage passé est associé à une valeur de balourd installé et à un paramètre temporel ;
- ledit vol dudit aéronef comprend une séquence de phases de fonctionnement dudit moteur, chaque phase de fonctionnement présentant pour chaque fréquence caractéristique une valeur nominale et/ou une dérivée nominale de la fréquence caractéristique, l'étape (a) comprenant la mesure d'au moins une valeur de niveau vibratoire dudit moteur pour au moins une desdites phases du fonctionnement, la mesure étant mise en œuvre à un instant de ladite phase de fonctionnement telle que la fréquence caractéristique présente une valeur et/ou une dérivée instantanées sensiblement égales respectivement à la valeur nominale et à la dérivée nominale de la fréquence caractéristique associées à la phase de fonctionnement ;
- ladite valeur de niveau vibratoire dudit module synchrone à ladite fréquence caractéristique correspond à l'amplitude de ladite fréquence caractéristique dans le spectre fréquentiel de vibration du moteur ;
- l'étape (b) comprend des sous-étapes de :

  - Pour chaque fréquence caractéristique, estimation d'une proportion de balourd du module à la fréquence caractéristique en fonction des valeurs de niveaux vibratoires mesurés ;
  - Pour chaque fréquence caractéristique, estimation d'un niveau vibratoire du module synchrone à la fréquence caractéristique ;
  - Pour chaque fréquence caractéristique, estimation d'un niveau de balourd du module associé à la fréquence caractéristique ;
  - Estimation de la valeur de balourd.

- Le procédé est tel que :

  - Le niveau vibratoire du module synchrone à une fréquence caractéristique est estimé comme le produit du niveau vibratoire mesuré synchrone à la fréquence caractéristique et la proportion estimée du balourd dudit module synchrone à la fréquence caractéristique ;
  - Le niveau de balourd du module associé à une fréquence caractéristique est estimé comme le rapport du niveau vibratoire dudit module synchrone à la fréquence caractéristique sur le coefficient de sensibilité dudit module synchrone à la fréquence caractéristique ;
  - La valeur de balourd est estimée comme la moyenne des niveaux de balourd dudit module associés à chacune des fréquences caractéristiques.

Selon un deuxième aspect, l'invention concerne un équipement de surveillance d'un moteur d'aéronef en fonctionnement pendant un vol, comprenant des moyens de traitement de données, des moyens de stockage de données stockant dans une base de données des données représentatives d'équilibrages passés du moteur, et des moyens d'interface, l'équipement étant caractérisé en ce que les moyens de traitement de données sont configurés pour :

- pour au moins une fréquence caractéristique du fonctionnement du moteur, recevoir depuis un capteur disposé dans le moteur au moins une valeur de niveau vibratoire synchrone à ladite fréquence caractéristique ;
- pour au moins un module dudit moteur, estimer une valeur de balourd dudit module en fonction de la ou les valeurs de niveau vibratoires mesurées et d'au moins un coefficient de sensibilité dudit module associé à ladite fréquence caractéristique ;
- estimer une marge d'équilibrage dudit module en fonction de la valeur de balourd dudit module et d'un seuil maximal associé au module ;
- estimer un nombre restant de vols dudit aéronef avant équilibrage et/ou de la qualité d'un équilibrage précédent en fonction de la ou les marges d'équilibrage estimées et de données représentatives d'équilibrages passés du moteur stockées dans une base de données stockée sur des moyens de stockage de données ;
- transmettre le résultat à des moyens d'interface.

Selon un troisième aspect, l'invention concerne un système comprenant :

- un moteur d'aéronef équipé d'un capteur pour la mesure d'au moins une valeur de niveau vibratoire synchrone à une fréquence caractéristique du moteur ;
- un équipement selon le deuxième aspect de surveillance d'un moteur d'aéronef en fonctionnement pendant un vol.

Selon un quatrième et un cinquième aspect, l'invention concerne un produit programme d'ordinateur comprenant des instructions de code pour l'exécution, par un équipement selon le troisième aspect de l'invention, d'un procédé selon le premier aspect de l'invention de surveillance d'un moteur d'aéronef en fonctionnement pendant un vol, lorsque ledit programme est exécuté sur un ordinateur ; et un moyen de stockage lisible par un équipement informatique sur lequel un produit programme d'ordinateur selon le quatrième aspect de l'invention.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 représente un exemple d'environnement dans lequel le procédé selon l'invention est mis en œuvre ;
- la figure 2 représente un exemple de courbe de valeurs de balourds obtenues grâce au procédé selon l'invention ;
- la figure 3 représente des courbes de sensibilité aux vibrations illustrant la valeur de coefficients de sensibilité pour différentes utilisation de l'aéronef ;
- les figures 4a-4b représentent des courbes complémentaires obtenues grâce à un mode de réalisation préféré du procédé selon l'invention.

DESCRIPTION DETAILLEE

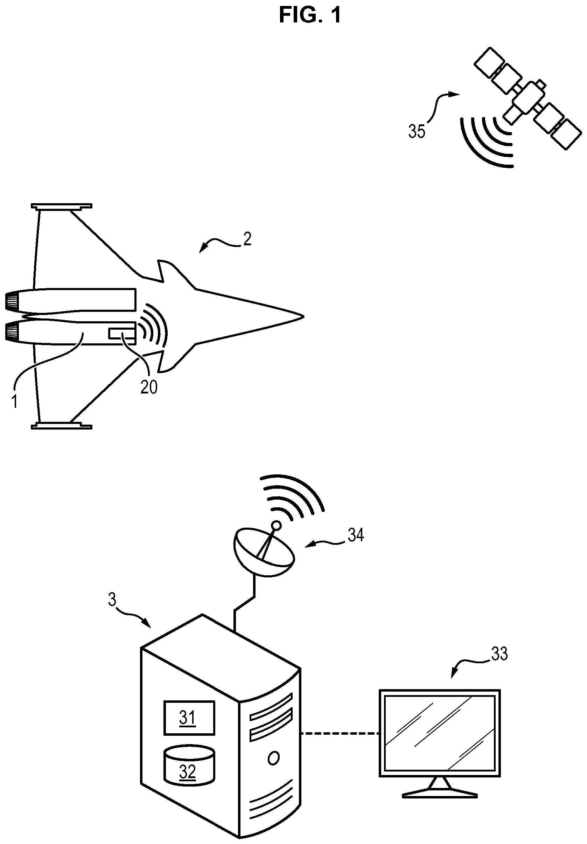

En référence à la **figure** 1, le présent procédé est un procédé de surveillance d'un moteur 1 d'aéronef 2 en fonctionnement pendant un vol.

Par surveillance, on entend l'évaluation d'un niveau de balourd du moteur 1, permettant de planifier un prochain équilibrage du moteur 1. De façon préférée, il s'agit d'une surveillance « pseudo temps réel » : le moteur 1 est équipé de capteurs 20 (qui comme l'on verra surveillent le balourd à un régime ou une fréquence de fonctionnement du moteur donné), actifs pendant le vol de l'aéronef 2. Ce dernier envoie régulièrement au sol des petits messages (instantanés ou différés) comprenant les valeurs des mesures issues des capteurs 20. Ces messages sont envoyés via des moyens de transmission, par exemple par satellite 35 (protocole ACARS notamment), et un équipement 3 disposé au sol, comprenant des moyens de traitement de données 31 (par exemple un processeur) et des moyens de stockage de données 32 (par exemple un disque dur), reçoit les données contenues dans ces messages via une station de base 34 et les traite pour la mise en œuvre du procédé.

L'homme du métier comprendra qu'il n'y a pas de limitation liée à la procédure de transmission des mesures à l'équipement 3 (il est par exemple possible que les mesures soient stockées sur l'aéronef 2 le temps du vol, et transmises en bloc à l'équipement 3 après l'atterrissage). Par ailleurs, le traitement peut être différé dans le temps. Il est même envisageable que l'équipement 3 soit intégré à l'aéronef 2.

L'équipement 3 (ou un autre équipement) est équipé de moyens d'interface 33 (tels qu'un clavier et un écran) pour interagir avec un utilisateur du système ou un autre équipement, et en particulier pour l'affichage des résultats (voir plus loin).

Le moteur 1 est typiquement tout ou partie d'une turbomachine, en particulier double flux. Comme l'on verra, le présent moteur 1 est préférentiellement un moteur au moins double corps (voire triple), c'est-à-dire qu'il possède un ensemble Haute Pression (HP) et un ensemble Basse Pression (BP) présentant chacun des fréquences de rotation différentes (chaque ensemble HP/BP est constitué d'une turbine HP/BP et d'un compresseur HP/BP reliés par un rotor). Les rotors de chacun des ensembles sont typiquement disposés l'un dans l'autre pour permettre ce découplage. Le moteur 1 comprend des « modules majeurs », c'est-à-dire des composants principaux, chacun en rotation lorsque le moteur 1 fonctionne, et ainsi susceptibles d'être à l'origine d'un problème d'équilibrage. Ces modules sont typiquement au nombre de cinq dans le cas d'un moteur 1 double corps : la soufflante (qui fait partie de l'ensemble BP), le compresseur BP, le compresseur HP, la turbine HP et la turbine BP. Il peut y avoir plus (ou moins) de couples compresseur/turbine.

Les fréquences de rotation associées à chaque ensemble HP/BP (exprimées en nombre de rotation effectuées par unité de temps) sont des fréquences caractéristiques du moteur 1, dans la mesure où toute vibration du moteur causée par un balourd est à une fréquence fonction d'au moins une de ces fréquences de rotation.

Ces fréquences définissent deux régimes moteur dits N1 et N2, respectivement BP et HP. Plus précisément, au régime N1 la fréquence caractéristique du moteur 1 est la fréquence de rotation de l'ensemble BP, et au régime N2 la fréquence caractéristique du moteur 1 est la fréquence de rotation de l'ensemble HP. On comprendra que chaque module majeur du moteur est associé à une des fréquences caractéristiques, qui est la fréquence à laquelle ce module tourne. Dans la suite de la présente description on prend l'exemple de deux fréquences caractéristiques (une fréquence BP et une fréquence HP) et donc de deux classes de modules (modules BP et HP), mais on note qu'il peut y en avoir davantage, puisqu'il existe par exemple des moteurs triple corps. De façon générale, chaque fréquence caractéristique correspond à un régime moteur. Comme l'on verra, un ou plusieurs des capteurs 20 pourront être dédiés à la détermination des fréquences caractéristiques du moteur.

On comprendra que dans tous les cas les valeurs de ces fréquences caractéristiques du moteur 1 ne sont pas constantes et dépendent naturellement des conditions de fonctionnement du moteur, en particulier des phases de fonctionnement du moteur 1.

En effet, un vol de l'aéronef 2 comprend toujours une séquence répétable de phases de vol, qui sont en général Roulage départ « Taxi-out » (déplacement de l'avion au sol avant décollage), décollage, ascension, généralement croisière (si le vol est assez long), descente et roulage arrivée « Taxi-in » (déplacement de l'avion au sol après atterrissage).

Chacune de ces phases est soit « stabilisée » (typiquement en croisière et au roulage) et est caractérisée par un régime stable, c'est-à-dire que la ou les fréquences caractéristiques du moteur 1 sont sensiblement constantes (dérivée sensiblement nulle), soit « transitoire » (typiquement au décollage, en ascension et en descente) et est caractérisée par des fréquences caractéristiques du moteur 1 croissantes ou décroissantes (dérivées de valeur absolue sensiblement élevée et constante).

Ainsi, chaque phase de fonctionnement est associée pour chaque fréquence caractéristique à une valeur nominale et/ou à une dérivée nominale de la fréquence caractéristique. Elles peuvent être stockées dans la base de données des moyens 32. On note que dans les phases transitoires, la valeur d'une fréquence caractéristique n'est pas constante, la valeur nominale peut alors être, par exemple, la valeur moyenne constatée pour la phase.

On comprendra que, de façon générale, toutes ces données descriptives des fréquences caractéristiques phase par phase peuvent être obtenues par analyse statistique d'un grand nombre de vol du même modèle de moteur 1.

*Procédé de surveillance*

Le présent procédé comprend deux grands ensembles d'étapes (a)-(c) et (d). Un premier ensemble d'étapes (a)-(c) vise à obtenir pour un module (et avantageusement pour chaque module) un indicateur appelé « marge d'équilibrage » du module, dont le but est de permettre d'assurer que le moteur reste exploitable, et s'il reste exploitable, d'estimer le nombre de vols réalisables avant rééquilibrage du moteur. Comme l'on verra plus tard, la marge d'équilibrage est typiquement une grandeur homogène à une valeur de balourd, qui peut être vue comme la tolérance à la hausse du balourd avant alerte. En d'autres termes :

- si la marge d'équilibrage est haute, c'est que les vibrations sont très faibles et que le balourd peut encore augmenter sensiblement avant qu'un équilibrage soit nécessaire ; et
- si la marge d'équilibrage est proche de zéro, c'est que le balourd est déjà critique et qu'une alerte vibratoire (et donc la nécessité d'un équilibrage) est imminente.

L'utilisation de cet indicateur, dont le calcul est explicité par la suite, permet une surveillance objective et reproductible de l'apparition de balourds dans le moteur.

Une dernière étape (d) est une étape d'exploitation de la ou les marges d'équilibrages estimées et de données représentatives d'équilibrages passés du moteur 1 (en entend ici le présent moteur et les autres moteurs du même modèle de moteur) stockées dans une base de données enregistrée sur les moyens de stockage de données 32, en vue soit d'estimer le nombre de vols de l'aéronef 2 avant qu'un nouvel équilibrage ne doive être réalisé, soit d'estimer la qualité d'un équilibrage précédent (en particulier d'un équilibrage qui vient juste d'être réalisé, i.e. juste avant le vol courant). On explique plus loin comment ces deux résultats peuvent alternativement être obtenus. On comprendra qu'il existe d'autres cas d'utilisations des données obtenues.

Les données représentatives d'équilibrages passés, stockées dans une base de données peuvent être vues comme des données de contexte. Plus précisément, la base de données contient de nombreuses estimations de marges d'équilibrage d'aéronefs 2 équipés des mêmes moteurs 1 (et présentant les mêmes modules fonctionnant dans les mêmes conditions), ainsi que les rapports d'équilibrages associés, de sorte qu'elle permet de constituer une base d'apprentissage.

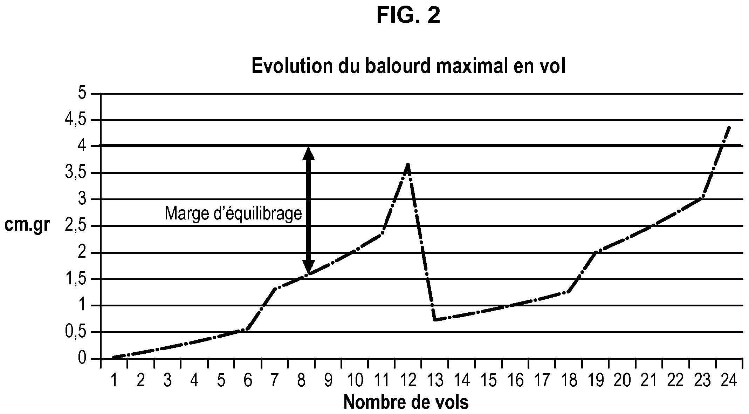

On obtient ainsi une pluralité de graphes du type de celui de la **figure 2,** représentant pour un module d'un moteur 1 donné, une évolution d'un balourd maximal en fonction de l'enchaînement des vols (il s'agit ici d'une représentation de la marge d'équilibrage, identifiée comme la différence entre une valeur de balourd et un seuil maximal associé).

Sur cet exemple, on remarque qu'un équilibrage (ici effectué correctement) a lieu entre le douzième et le treizième vol. Chaque équilibrage passé est ainsi associé dans la base de données à une valeur de balourd installé (c'est-à-dire à un balourd « correctif » destiné à compenser le balourd apparu ou existant) et à un paramètre temporel, en particulier un paramètre relatif à la séquence de vols permettant de savoir entre quels vols l'équilibrage a eu lieu (et ainsi depuis combien de vols), et/ou depuis combien d'heures de vol.

Dans le cas d'un moteur double corps, chaque équilibrage est un équilibrage Basse pression et/ou un équilibrage Haute Pression, ce qui est également renseigné dans la base de données.

*Acquisition de mesures de vibration synchrone*

La phase d'estimation de la marge d'équilibrage pour un module du moteur 1 commence par une première étape (a) de mesure par un capteur 20, pour au moins une fréquence caractéristique du fonctionnement du moteur 1 (avantageusement pour chacune des fréquences caractéristiques du fonctionnement du moteur 1), d'au moins une valeur de niveau vibratoire dudit module, synchrone à ladite fréquence caractéristique. Ces « niveaux vibratoires synchrones » sont synchronisés à une fréquence caractéristique du moteur. On note que la ou les fréquences caractéristiques du moteur 1 peuvent faire l'objet d'une mesure préalable, voir plus loin.

Ledit capteur 20 est un capteur intégré au moteur 1 (on comprendra qu'il y a avantageusement une pluralité de capteurs 20 à différentes positions dans le moteur 1), pouvant transmettre des données éventuellement en temps réel à une unité de traitement généralement située dans l'aéronef (pour exploitation immédiate ou différée (au sol par exemple) des résultats). On connait de nombreux capteurs capables de mesurer des vibrations, fournissant généralement des valeurs d'accélération, de vitesse et/ou de déplacement du moteur 1. Les valeurs fournies sont traitées (directement par le capteur 20 ou de façon déportée) par analyse spectrale, par exemple en utilisant les algorithmes de Fourier de manière à fournir une mesure du spectre fréquentiel caractéristique des vibrations du moteur. Le spectre d'une vibration est l'ensemble des données de niveaux et de fréquences des vibrations pures le composant. Une éventuelle première intégration permet d'obtenir une vitesse de vibration à partir d'une accélération, et une éventuelle deuxième intégration permet d'obtenir un déplacement à partir d'une vitesse.

Dans le cadre du présent procédé, ce sont les valeurs de vitesse de vibration qui sont préférées. Ainsi, dans le spectre obtenu l'amplitude d'une raie indique la vitesse maximale de vibration obtenue à la fréquence associée. Si l'on souhaite une valeur de niveau vibratoire dudit moteur 1 synchrone à ladite fréquence caractéristique, il suffit donc de sélectionner la raie du spectre à cette fréquence caractéristique et de prendre l'amplitude de cette raie (ou de moyenner une bande fréquentielle étroite centrée sur la fréquence caractéristique). Avantageusement, on obtient un niveau vibratoire à la fréquence BP et un niveau vibratoire à la fréquence HP.

On note que cette acquisition de mesure se fait avantageusement une fois par phase de vol (taxi-out, décollage, etc.). Puisque, comme expliqué précédemment, chaque phase de fonctionnement est associée pour chaque fréquence caractéristique à une valeur nominale et/ou à une dérivée nominale de la fréquence caractéristique, il suffit de fixer des intervalles autour des valeurs nominales cohérents avec la phase étudiée et de sélectionner un instant de fonctionnement compatible avec ces intervalles pour obtenir la (ou les) mesures de niveau vibratoire synchrones recherchés. L'acquisition des niveaux vibratoires peut d'ailleurs être conditionnée au maintien d'un régime N1 et un régime N2 (i.e. des fréquences BP et HP) pendant un temps de confirmation donné.

Les mesures de niveaux vibratoires par phase sont alors combinées pour obtenir un niveau vibratoire du vol (toujours par fréquence caractéristique), par exemple en prenant le maximum sur le vol, ou via une combinaison linéaire des différents niveaux vibratoires par phase.

De façon préférée, comme expliqué l'étape (a) comprend la mesure préalable par un autre capteur 20, disposé dans le moteur 1, d'au moins une fréquence caractéristique du fonctionnement du moteur 1, i.e. des régimes sur des points stabilisés de fonctionnement (où le régime varie peu). Plus précisément, il peut y avoir un capteur dédié par ensemble de modules (i.e. un capteur pour l'ensemble HP et un capteur pour l'ensemble BP), typiquement un tachymètre mesurant la vitesse de rotation de l'ensemble : le nombre de tours par unité de temps de l'ensemble définit la fréquence caractéristique.

Ces capteurs 20 pour la mesure des fréquences caractéristiques sont typiquement positionnés à l'avant du moteur 1 et peuvent être déportés par rapport au rotor. Préférentiellement, le capteur pour l'ensemble BP (dit capteur N1) est au niveau de la soufflante, le capteur pour l'ensemble HP (dit capteur N2) se situe dans l'AGB (« Accessory GearBox » ou boitier d'accessoires) dans des architectures classiques.

*Traitement*

Dans une deuxième étape (b), les moyens de traitement de données 31 estiment une valeur de balourd (exprimée comme une masse à une distance donnée de l'axe de rotation, en g.cm sur la figure 2) pour au moins un module du moteur 1 (avantageusement pour chaque module du moteur 1) en fonction des valeurs de niveau vibratoire mesurées et d'au moins un coefficient de sensibilité associé à la fréquence caractéristique et au module.

Avantageusement, un coefficient de sensibilité est disponible par module et par régime, et par capteur 20 (typiquement un déplacement de 1 mils-da (0,0254 mm, valeur double amplitude) pour un module BP car le régime du module BP est plus faible donc moins bruité on peut alors se permettre de s'intéresser au déplacement, et typiquement une vitesse de 1 ips-pk (0,0254 mètre par secondes, valeur crête) pour un module HP car le déplacement est trop bruité on préfère utiliser la vitesse, par exemple).

Les coefficients de sensibilité sont ainsi des paramètres prédéterminés de l'algorithme, adimensionnels, qui reflètent l'impact des vibrations sur les personnes ou objets transportés par l'aéronef 2 (pilote, passagers, et/ou fret).

Ainsi, un coefficient de sensibilité élevé signifie qu'au régime associé les vibrations du module causent un balourd très perceptible, alors qu'au contraire un coefficient de sensibilité bas signifie que les mêmes vibrations du module ne causent qu'une gêne limitée.

Les coefficients peuvent être éventuellement déterminés par apprentissage, mais de façon préférée ils sont calculés en fonction du mode d'utilisation de l'aéronef 2 (c'est-à-dire ce qui ou quoi il transporte) et du niveau d'exigences de l'utilisateur (c'est-à-dire l'opérateur de l'aéronef).

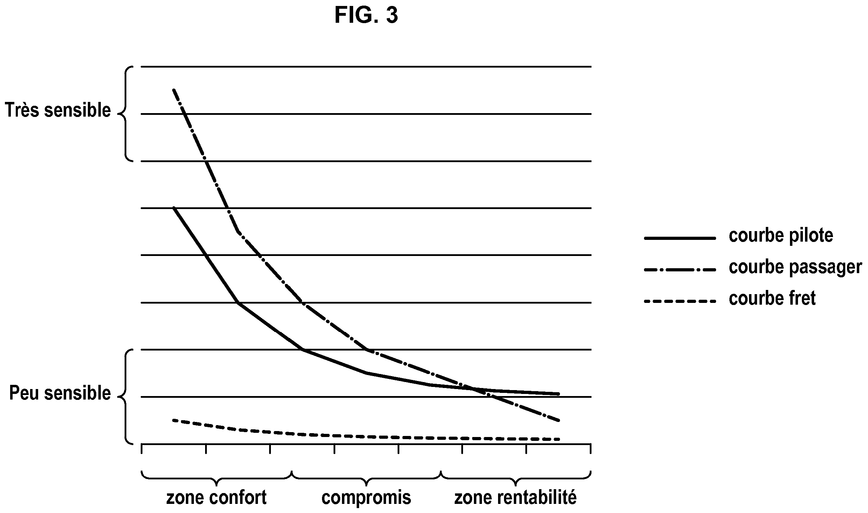

En effet, on comprend que les passagers, les pilotes ou du fret n'auront pas le même ressenti des vibrations. De même, le niveau de tolérance aux vibrations peut dépendre selon le type de prestation offert, i.e. le choix de privilégier la qualité du vol ou sa rentabilité. L'expérience donne en effet des courbes de sensibilité aux vibrations différentes du type de celles représentées par la figure 3, qui représentent des coefficients de sensibilité élémentaires associés à chacun des modes d'utilisation du moteur (pilote/passagers/fret), en fonction du positionnement confort de l'utilisateur

Ainsi, de façon préférée, le procédé comprend la détermination préalable des coefficients de sensibilité à utiliser à l'étape (b) en fonction des conditions du vol, du mode d'utilisation et de l'utilisateur, grâce à des modèles construits statistiquement à partir d'une base de données relatives à des vols de l'aéronef 2.

En effet, le constat est que chacun des pilote/passagers/fret peut être plus sensible aux vibrations et au bruit durant certaines phases d'opération du moteur, i.e. à différents régimes et sous l'effet de divers modules. En particulier :

- les pilotes présentent une sensibilité élevée au décollage et à l'atterrissage car ce sont des phases pendant lesquelles ils doivent être parfaitement concentrés ;
- les passagers présentent une sensibilité élevée dans la phase d'ascension car elle est moins agréable du fait d'accélérations inhabituelles pour l'organisme, et pendant la phase de croisière car elle est longue ;
- le fret présente une sensibilité élevée au décollage car c'est là que les objets transportés sont le plus susceptibles d'être endommagés du fait de la violente accélération.

Ces phases où la sensibilité est élevée sont appelées phases critiques du mode d'opération.

Ainsi, peuvent être prédéfinis des facteurs élémentaires $\alpha$ chacun associé à un mode d'utilisation (typiquement trois types d'utilisateur passagers, pilote et/ou fret) et à une phase du vol, pondérés en fonction des durées relatives des phases critiques pour ledit mode d'opération sur l'ensemble du vol, de sorte à obtenir des coefficients de sensibilité pour le vol.

Plus précisément, chaque coefficient de sensibilité est par exemple calculé par phase du vol avec la formule $Coef_t = \alpha_{pilote} * Coef_{t_{pilote}} + \alpha_{passager} * Coef_{t_{passager}} + \alpha_{engineering} * Coef_{t_{engineering}}$ $Coef_{t_{pilote}}$ (et similairement les autres coefficients associés aux passagers et au fret) calculé de la façon suivante :

$$Coef_{i_{pilote}} = \frac{durée\ typique_{\ phase\ de\ vol\ de\ i}}{durée\ typique_{mission}} * pondération_{phase\ i}$$ la pondération étant entre 0 et 1 selon la criticité de la phase. Comme expliqués les facteurs élémentaires $\alpha$ sont laissés à l'appréciation de l'utilisateur de sorte à être représentatif de l'usage de son aéronef 2 et des exigences de confort souhaitées, et le présent algorithme calcule les coefficients de sensibilité optimaux associés qui permettront d'avoir une tolérance au balourd et un planning d'équilibrage cohérent avec cet usage et ces exigences de confort.

Le calcul de la valeur de balourd pour un module à l'étape (b) comprend avantageusement quatre sous-étapes :

- Estimation d'une proportion de balourd à chaque fréquence caractéristique sur les niveaux vibratoires mesurés. On modélise un niveau vibratoire théorique en utilisant les proportions des balourds des modules contribuant et les coefficients de sensibilité associés à une fréquence vibratoire. A partir de la valeur du niveau vibratoire mesuré, on cherche le niveau théorique le plus proche en faisant un balayage des proportions de balourds de chaque module. On retient donc la proportion de balourd qui forme le niveau vibratoire théorique le plus proche du niveau vibratoire mesuré ;
- Estimation d'un niveau vibratoire du module synchrone à la fréquence caractéristique comme le produit du niveau vibratoire mesuré synchrone à la fréquence caractéristique et la proportion estimée du balourd dudit module synchrone à la fréquence caractéristique ;
- Estimation d'un niveau de balourd du module associé à chaque fréquence caractéristique comme le rapport du niveau vibratoire dudit module synchrone à la fréquence caractéristique sur le coefficient de sensibilité dudit module synchrone à la fréquence caractéristique ;
- Estimation de la valeur de balourd comme la moyenne des niveaux de balourd dudit module sur toutes les fréquences caractéristiques

En d'autres termes, dans le cas préféré de deux régimes BP et HP, on commence par associer chaque module soit à un balourd BP, soit à un balourd HP. On estime sur les mesures de niveaux vibratoires des proportions de balourd pour chaque module : dans les mesures de niveaux vibratoires synchrones de la fréquence BP les proportions de balourd des modules BP, et sur les mesures de niveaux vibratoires synchrones de la fréquence HP les proportions de balourd des modules HP.

Puis, on estime les niveaux vibratoires associés à chaque module BP (respectivement HP) comme le produit des mesures d'un niveau vibratoire synchrone de la fréquence BP (respectivement HP) et la proportion de balourd de ce module.

Ensuite, on estime les niveaux de balourds à chaque module BP (respectivement HP) comme le rapport des niveaux vibratoires associés à chaque module BP (respectivement HP) et du coefficient de sensibilité BP (respectivement HP).

Enfin on déduit la valeur de balourd pour chaque module du moteur 1 comme la moyenne des niveaux de balourds (calculés sur plusieurs fréquences caractéristiques) associés à ce module.

On obtient ainsi de façon simple une seule valeur de balourd sur l'ensemble des phases de vol.

Dans, une troisième étape (c), les moyens de traitement de données 31 estiment une marge d'équilibrage dudit module en fonction de la valeur de balourd dudit module et d'un seuil maximal associé à ce module (seuil paramétrable par un opérateur de maintenance, correspondant par défaut au seuil d'alerte vibratoire cockpit). On fait, en pratique, la différence entre la valeur du balourd et le seuil, comme on peut le voir sur la figure 2 pour le huitième vol.

Si la valeur du balourd excède le seuil, c'est qu'un équilibrage d'urgence du module doit être réalisé.

*Exploitation des données*

Selon un premier mode de réalisation, l'étape (d) consiste en l'estimation de la qualité d'un équilibrage précédent, en fonction desdites marges d'équilibrage estimées et de données représentatives d'équilibrages passés stockés dans la base de données.

L'action d'équilibrage est évaluée par un indicateur de qualité qui mesure pour chaque module (par exemples en termes de pourcentage) le niveau de balourd/marge d'équilibrage atteint après équilibrage par rapport à un niveau cible.

Cela se fait par exemple en calculant la variation de marge d'équilibrage (en valeur absolue ou relative) lors de l'équilibrage. On voit par exemple sur le graphique de la figure 2 une diminution de la valeur de balourd de 3.75 à 0.75 g.cm, soit une augmentation de la marge d'équilibrage de 0.25 à 3.25 (multipliée par onze), ce qui témoigne d'un équilibrage réussi et de qualité. Plus la marge d'équilibrage est proche du seuil (i.e. plus le balourd résiduel après équilibrage est proche de zéro) meilleur est l'équilibrage.

La qualité est définie comme satisfaisante ou non par comparaison de l'indicateur de qualité avec ceux des équilibrages passés pour lesquels des données sont stockées dans ladite base.

Dans le cas où la restauration de la marge d'équilibrage n'est plus satisfaisante (niveau de balourd élevé après opération d'équilibrage), une opération de maintenance complémentaire peut être déclenchée au plus tôt afin d'éviter la remontée d'alertes vibratoires cockpit au pilote. Le but est d'offrir le meilleur service et le meilleur niveau de sécurité possible.

Selon un deuxième mode de réalisation, l'étape (d) consiste en l'estimation d'un nombre de vols dudit aéronef 2 avant équilibrage, en fonction desdites marges d'équilibrage estimées et de données représentatives d'équilibrages passés stockés dans la base de données.

A l'aide de la marge d'équilibrage d'un module, il est ainsi possible d'effectuer un calcul de tendance ou de réaliser une extrapolation (linéaire, polynomiale, spline, etc.) sur les données de la base de données, afin d'estimer le nombre de vols ou le nombre d'heures de vol réalisables avant qu'il ne soit nécessaire d'effectuer un nouvel équilibrage.

Cette solution permet d'établir un pronostic, pour un moteur 1, sur la durée entre deux équilibrages successifs et de construire un indicateur sur la fréquence d'équilibrage au sein d'une flotte de moteurs 1, de sorte qu'il est possible d'optimiser la stratégie de maintenance associée à cette opération.

Avantageusement peut être établi un indicateur de tendance, basé sur la pente issue d'une régression linéaire moyennée sur un nombre paramétrable d'heures de vol ou de vols.

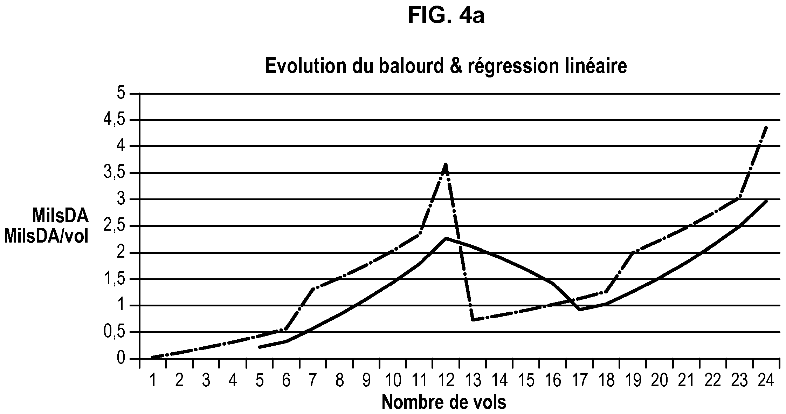

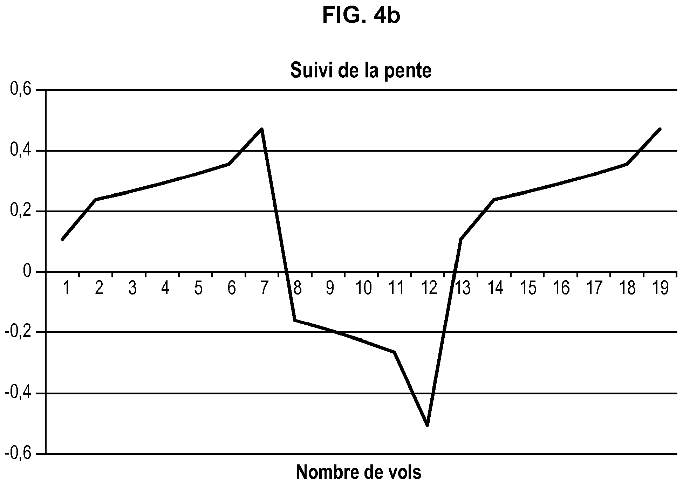

Par exemple, la figure 4a illustre le résultat du calcul de régression linéaire sur une fenêtre glissante de cinq vols à partir du graphique de la figure 2, et la figure 4b illustre la dérivée de la courbe de la figure 4a.

Dans tous les cas, les résultats obtenus (estimation du nombre restant de vols dudit aéronef 2 avant équilibrage et/ou de l'indicateur de qualité du précédent équilibrage) doivent pouvoir être visualisés via des moyens d'interface 33 pour permettre leur analyse et leur suivi par des experts métiers.

Ces données vont également avantageusement venir enrichir la base de données d'équilibrage 32.

*Equipement et système*

L'équipement 3 (représenté sur la figure 1) pour la mise en œuvre du procédé qui vient d'être décrit (surveillance d'un moteur 1 d'aéronef 2 en fonctionnement pendant un vol) comprend des moyens de traitement de données 31, des moyens de stockage de données 32, et de moyens d'interface 33.
Les moyens de stockage de données 32 stockent dans une base de données des données représentatives d'équilibrages passés.
Les moyens de traitement de données 31 sont configurés :

- pour au moins une fréquence caractéristique du fonctionnement du moteur 1, recevoir depuis un capteur 20 disposé dans le moteur 1 au moins une valeur de niveau vibratoire synchrone à ladite fréquence caractéristique ;
- pour au moins un module dudit moteur 1, estimer une valeur de balourd dudit module en fonction desdites valeurs de niveau vibratoires mesurées et d'au moins un coefficient de sensibilité dudit module associé à ladite fréquence caractéristique ;
- estimer une marge d'équilibrage dudit module en fonction de la valeur de balourd dudit module et d'un seuil maximal associé au module ;
- estimer un nombre restant de vols dudit aéronef 2 avant équilibrage et/ou de la qualité d'un équilibrage précédent en fonction desdites marges d'équilibrage estimées et de données représentatives d'équilibrages passés stockés dans une base de données stockée sur des moyens de stockage de données 32 ;
- transmettre le résultat à des moyens d'interface 33

Comme expliqué, l'équipement 3 s'inscrit de façon préférée dans un système comprenant en outre un moteur 1 d'aéronef 2 équipé du capteur 20 mesurant le ou les niveaux vibratoires synchrones.

*Produit programme d'ordinateur*

Selon un quatrième et un cinquième aspects, l'invention concerne un produit programme d'ordinateur comprenant des instructions de code pour l'exécution (sur des moyens de traitement de donnés 31, en particulier ceux de l'équipement 3) d'un procédé selon le premier aspect de l'invention de surveillance d'un moteur 1 d'aéronef 2 en fonctionnement pendant un vol, ainsi que des moyens de stockage lisibles par un équipement informatique (par exemple les moyens de stockage de données 32 de cet équipement 3) sur lequel on trouve ce produit programme d'ordinateur.

**Revendications**

1. Procédé de surveillance d'un moteur (1) d'aéronef (2) en fonctionnement pendant un vol, le procédé étant **caractérisé en ce qu'**il comprend la mise en œuvre d'étapes de

   (a) Pour au moins une fréquence caractéristique du fonctionnement du moteur (1), mesure par un capteur (20) disposé dans le moteur (1) d'au moins une valeur de niveau vibratoire synchrone à ladite fréquence caractéristique ;
   (b) Pour au moins un module dudit moteur (1), estimation par des moyens de traitement de données (31) d'une valeur de balourd dudit module en fonction de la ou les valeurs de niveau vibratoires mesurées et d'au moins un coefficient de sensibilité dudit module associé à ladite fréquence caractéristique, ledit coefficient de sensibilité étant un paramètre prédéterminé et adimensionnel, reflétant l'impact perceptif des vibrations dues à un balourd sur les personnes ou objets transportés par l'aéronef (2) ;
   (c) Estimation par les moyens de traitement de données (31) d'une marge d'équilibrage dudit module en fonction de la valeur de balourd dudit module et d'un seuil maximal associé au module ;
   (d) Estimation d'un nombre restant de vols dudit aéronef (2) avant équilibrage et/ou d'un indicateur de qualité d'un équilibrage précédent en fonction de la ou les marges d'équilibrage estimées et de données représentatives d'équilibrages passés du moteur (1) stockées dans une base de données stockée sur des moyens de stockage de données (32), et transmission à des moyens d'interface (33).

2. Procédé selon la revendication 1, dans lequel l'étape (a) comprend la mesure préalable par un autre capteur (20) disposé dans le moteur (1) d'au moins une fréquence caractéristique du fonctionnement du moteur (1).

3. Procédé selon l'une des revendications 1 et 2, dans lequel ledit moteur (1) est un moteur au moins double corps présentant au moins deux fréquences caractéristiques dont une fréquence Basse Pression (BP) et une fréquence Haute Pression (HP), chaque équilibrage étant un équilibrage Basse pression et/ou un équilibrage Haute Pression.

4. Procédé selon la revendication 3, dans lequel la fréquence BP est la fréquence de rotation d'un ensemble Basse Pression du moteur (1) et la fréquence HP est la fréquence de rotation d'un ensemble Haute Pression du moteur (1).

5. Procédé selon l'une des revendications 3 et 4, dans lequel chaque module du moteur (1) est associé à l'ensemble Haute Pression ou à l'ensemble Basse Pression, et choisi parmi une soufflante, au moins une turbine, et au moins un compresseur.

6. Procédé selon l'une des revendications 1 à 5, dans lequel chaque équilibrage passé est associé à une valeur de balourd installé et un paramètre temporel.

7. Procédé selon l'une des revendications 1 à 6, dans lequel ledit vol dudit aéronef (2) comprend une séquence de phases de fonctionnement dudit moteur (1), chaque phase de fonctionnement présentant pour chaque fréquence caractéristique une valeur nominale et/ou une dérivée nominale de la fréquence caractéristique, l'étape (a) comprenant la mesure d'au moins une valeur de niveau vibratoire dudit moteur (1) pour au moins une desdites phases du fonctionnement, la mesure étant mise en œuvre à un instant de ladite phase de fonctionnement telle que la fréquence caractéristique présente une valeur et/ou une dérivée instantanées sensiblement égales respectivement à la valeur nominale et la dérivée nominale de la fréquence caractéristique associées à la phase de fonctionnement.

8. Procédé selon l'une des revendications 1 à 7, dans lequel ladite valeur de niveau vibratoire dudit module synchrone à ladite fréquence caractéristique correspond à l'amplitude de ladite fréquence caractéristique dans le spectre fréquentiel de vibration du moteur (1).

9. Procédé selon l'une des revendications 1 à 8, dans lequel l'étape (b) comprend des sous-étapes de :

- Pour chaque fréquence caractéristique, estimation d'une proportion de balourd du module à la fréquence caractéristique en fonction des valeurs de niveaux vibratoires mesurées ;
- Pour chaque fréquence caractéristique, estimation d'un niveau vibratoire du module synchrone à la fréquence caractéristique ;
- Pour chaque fréquence caractéristique, estimation d'un niveau de balourd du module associé à la fréquence caractéristique ;
- Estimation de la valeur de balourd.

10. Procédé selon la revendication 9, dans lequel :

- Le niveau vibratoire du module synchrone à une fréquence caractéristique est estimé comme le produit du niveau vibratoire mesuré synchrone à la fréquence caractéristique et la proportion estimée du balourd dudit module synchrone à la fréquence caractéristique ;
- Le niveau de balourd du module associé à une fréquence caractéristique est estimé comme le rapport du niveau vibratoire dudit module synchrone à la fréquence caractéristique sur le coefficient de sensibilité dudit module synchrone à la fréquence caractéristique ;
- La valeur de balourd est estimée comme la moyenne des niveaux de balourd dudit module associés à chacune des fréquences caractéristiques.

11. Equipement (3) de surveillance d'un moteur (1) d'aéronef (2) en fonctionnement pendant un vol, comprenant des moyens de traitement de données (31), des moyens de stockage de données (32) stockant dans une base de données des données représentatives d'équilibrages passés du moteur (1), et des moyens d'interface (33), l'équipement (3) étant **caractérisé en ce que** les moyens de traitement de données (31) sont configurés pour :

- Pour au moins une fréquence caractéristique du fonctionnement du moteur (1), recevoir depuis un capteur (20) disposé dans le moteur (1) au moins une valeur de niveau vibratoire synchrone à ladite fréquence caractéristique ;
- pour au moins un module dudit moteur (1), estimer une valeur de balourd dudit module en fonction de la ou les valeurs de niveau vibratoires mesurées et d'au moins un coefficient de sensibilité dudit module associé à ladite fréquence caractéristique, ledit coefficient de sensibilité étant un paramètre prédéterminé et adimensionnel, reflétant l'impact perceptif des vibrations dues à un balourd sur les personnes ou objets transportés par l'aéronef (2) ;

- estimer une marge d'équilibrage dudit module en fonction de la valeur de balourd dudit module et d'un seuil maximal associé au module ;
- estimer un nombre restant de vols dudit aéronef (2) avant équilibrage et/ou de la qualité d'un équilibrage précédent en fonction de la ou les marges d'équilibrage estimées et de données représentatives d'équilibrages passés du moteur (1) stockés dans une base de données stockée sur des moyens de stockage de données (32),
- transmettre à des moyens d'interface (33).

12. Système comprenant :

- un moteur (1) d'aéronef (2) équipé d'un capteur (20) pour la mesure d'au moins une valeur de niveau vibratoire synchrone à une fréquence caractéristique du moteur (1) ;
- un équipement (3) selon la revendication 11 de surveillance d'un moteur (1) d'aéronef (2) en fonctionnement pendant un vol.

13. Produit programme d'ordinateur comprenant des instructions de code qui conduisent le système selon la revendication 12 à exécuter les étapes d'un procédé selon l'une des revendications 1 à 10 de surveillance d'un moteur (1) d'aéronef (2) en fonctionnement pendant un vol, lorsque ledit programme est exécuté sur un ordinateur.

14. Moyen de stockage lisible par un équipement informatique sur lequel est enregistré le produit programme d'ordinateur selon la revendication 13.


**Patentansprüche**

1. Verfahren zur Überwachung eines sich in Betrieb befindlichen Motors (1) eines Luftfahrzeugs (2) während eines Flugs, wobei das Verfahren **dadurch gekennzeichnet ist, dass** es die Umsetzung folgender Schritte umfasst

(a) für mindestens eine für den Betrieb des Motors (1) charakteristische Frequenz, Messen, durch einen Sensor (20), der in dem Motor (1) angeordnet ist, mindestens eines Schwingungspegelwerts, der mit der charakteristischen Frequenz synchron ist;
(b) für mindestens ein Modul des Motors (1), Schätzen, durch Datenverarbeitungsmittel (31), eines Unwuchtwerts des Moduls in Abhängigkeit von dem oder den gemessenen Schwingungspegelwerten und von mindestens einem Empfindlichkeitskoeffizienten des Moduls, der der charakteristischen Frequenz zugehörig ist, wobei der Empfindlichkeitskoeffizient ein vorbestimmter und adimensionaler Parameter ist, der die perzeptive Wirkung der Schwingungen aufgrund einer Unwucht auf die Personen oder Gegenstände, die von dem Luftfahrzeug (2) transportiert werden, widerspiegelt;
(c) Schätzen, durch die Datenverarbeitungsmittel (31), einer Auswuchtungsspanne des Moduls in Abhängigkeit von dem Unwuchtwert des Moduls und eines maximalen Grenzwerts, der dem Modul zugehörig ist;
(d) Schätzen einer verbleibenden Anzahl von Flügen des Luftfahrzeugs (2) vor der Auswuchtung und/oder eines Qualitätsindikators einer vorhergehenden Auswuchtung in Abhängigkeit von der oder den geschätzten Auswuchtungsspannen und von Daten, die bezeichnend sind für vergangene Auswuchtungen des Motors (1), die in einer Datenbank gespeichert sind, die auf Datenspeichermitteln (32) gespeichert ist, und Übertragen an Schnittstellenmittel (33).

2. Verfahren nach Anspruch 1, wobei der Schritt (a) das vorherige Messen, durch einen anderen Sensor (20), der in dem Motor (1) angeordnet ist, mindestens einer für den Betrieb des Motors (1) charakteristischen Frequenz umfasst.

3. Verfahren nach einem der Ansprüche 1 und 2, wobei der Motor (1) mindestens ein Doppelkörper-Motor ist, der mindestens zwei charakteristische Frequenzen aufweist, davon eine Niederdruckfrequenz (BP) und eine Hochdruckfrequenz (HP), wobei jede Auswuchtung eine Niederdruckauswuchtung und/oder eine Hochdruckauswuchtung ist.

4. Verfahren nach Anspruch 3, wobei die BP-Frequenz die Rotationsfrequenz einer Niederdruckeinheit des Motors (1) ist und die HP-Frequenz die Rotationsfrequenz einer Hochdruckeinheit des Motors (1) ist.

5. Verfahren nach einem der Ansprüche 3 und 4, wobei jedes Modul des Motors (1) der Hochdruckeinheit oder der Niederdruckeinheit zugehörig ist und gewählt wird aus einem Gebläse, mindestens einer Turbine und mindestens einem Kompressor.

6. Verfahren nach einem der Ansprüche 1 bis 5, wobei jede vergangene Auswuchtung einem installierten Unwuchtwert und einem Zeitparameter zugehörig ist.

7. Verfahren nach einem der Ansprüche 1 bis 6, wobei der Flug des Luftfahrzeugs (2) eine Sequenz von Betriebsphasen des Motors (1) umfasst, wobei jede Betriebsphase für jede charakteristische Frequenz einen Sollwert und/oder eine Sollableitung der charakteristischen Frequenz aufweist, wobei der Schritt (a) das Messen mindestens eines Schwingungspegelwerts des Motors (1) für mindestens eine der Betriebsphasen umfasst, wobei das Messen zu einem Zeitpunkt der Betriebsphase ausgeführt wird, sodass die charakteristische Frequenz einen momentanen Wert und/oder eine momentane Ableitung aufweist, die im Wesentlichen gleich sind wie jeweils der Sollwert und die Sollableitung der charakteristischen Frequenz, die der Betriebsphase zugehörig sind.

8. Verfahren nach einem der Ansprüche 1 bis 7, wobei der Schwingungspegelwert des Moduls, der synchron ist mit der charakteristischen Frequenz, der Amplitude der charakteristischen Frequenz in dem Schwingungsfrequenzspektrum des Motors (1) entspricht.

9. Verfahren nach einem der Ansprüche 1 bis 8, wobei der Schritt (b) folgende Unterschritte umfasst:

- für jede charakteristische Frequenz, Schätzen eines Unwuchtanteils des Moduls bei der charakteristischen Frequenz in Abhängigkeit von den gemessenen Schwingungspegelwerten;
- für jede charakteristische Frequenz, Schätzen eines Schwingungspegels des Moduls, der synchron ist mit der charakteristischen Frequenz;
- für jede charakteristische Frequenz, Schätzen eines Unwuchtpegels des Moduls, der der charakteristischen Frequenz zugehörig ist;
- Schätzen des Unwuchtwerts.

10. Verfahren nach Anspruch 9, wobei:

- der Schwingungspegel des Moduls, der synchron ist mit einer charakteristischen Frequenz, geschätzt wird als Produkt des gemessenen Schwingungspegels, der synchron ist mit der charakteristischen Frequenz, und des gemessenen Unwuchtanteils des Moduls, der synchron ist mit der charakteristischen Frequenz;
- der Unwuchtpegel des Moduls, der einer charakteristischen Frequenz zugehörig ist, geschätzt wird als Bezug des Schwingungspegels des Moduls, der synchron ist mit der charakteristischen Frequenz, auf den Empfindlichkeitskoeffizienten des Moduls, der synchron ist mit der charakteristischen Frequenz;
- der Unwuchtwert geschätzt wird als Durchschnitt der Unwuchtpegel des Moduls, die jeder der charakteristischen Frequenzen zugehörig sind.

11. Einrichtung (3) zur Überwachung eines sich in Betrieb befindlichen Motors (1) eines Luftfahrzeugs (2) während eines Flugs, umfassend Datenverarbeitungsmittel (31), Datenspeichermittel (32), die in einer Datenbank Daten speichern, die für vergangene Auswuchtungen des Motors (1) bezeichnend sind, und Schnittstellenmittel (33), wobei die Einrichtung (3) **dadurch gekennzeichnet ist, dass** die Datenverarbeitungsmittel (31) konfiguriert sind zum:

- für mindestens eine für den Betrieb des Motors (1) charakteristische Frequenz, Empfangen, ausgehend von einem Sensor (20), der in dem Motor (1) angeordnet ist, mindestens eines Schwingungspegelwerts, der mit der charakteristischen Frequenz synchron ist;
- für mindestens ein Modul des Motors (1), Schätzen, eines Unwuchtwerts des Moduls in Abhängigkeit von dem oder den gemessenen Schwingungspegelwerten und von mindestens einem Empfindlichkeitskoeffizienten des Moduls, der der charakteristischen Frequenz zugehörig ist, wobei der Empfindlichkeitskoeffizient ein vorbestimmter und adimensionaler Parameter ist, der die perzeptive Wirkung der Schwingungen aufgrund einer Unwucht auf die Personen oder Gegenstände, die von dem Luftfahrzeug (2) transportiert werden, widerspiegelt;
- Schätzen einer Auswuchtungsspanne des Moduls in Abhängigkeit von dem Unwuchtwert des Moduls und eines maximalen Grenzwerts, der dem Modul zugehörig ist;
- Schätzen einer verbleibenden Anzahl von Flügen des Luftfahrzeugs (2) vor der Auswuchtung und/oder der Qualität einer vorhergehenden Auswuchtung in Abhängigkeit von der oder den geschätzten Auswuchtungsspannen und von Daten, die bezeichnend sind für vergangene Auswuchtungen des Motors (1), die in einer Datenbank gespeichert sind, die auf Datenspeichermitteln (32) gespeichert ist,
- Übertragen an Schnittstellenmittel (33).

12. System, umfassend:

- einen Motor (1) eines Luftfahrzeugs (2), ausgestattet mit einem Sensor (20) zum Messen mindestens eines Schwingungspegelwerts, der mit einer charakteristischen Frequenz des Motors (1) synchron ist;
- eine Einrichtung (3) nach Anspruch 11 zur Überwachung eines sich in Betrieb befindlichen Motors (1) eines Luftfahrzeugs (2) während eines Flugs.

13. Computerprogrammprodukt, umfassend Codeanweisungen, die das System nach Anspruch 12 veranlassen, die Schritte eines Verfahrens nach einem der Ansprüche 1 bis 10 zur Überwachung eines sich in Betrieb befindlichen Motors (1) eines Luftfahrzeugs (2) während eines Flugs auszuführen, wenn das Programm auf einem Computer ausgeführt wird.

14. Speichermittel, das von einer Informatikeinrichtung lesbar ist, auf dem das Computerprogrammprodukt nach Anspruch 13 gespeichert ist.

**Claims**

1. A method for monitoring, during a flight, an aircraft (2) engine (1) in operation, the method being **characterized in that** it comprises performing steps of

   (a) For at least one characteristic frequency of the operation of the engine (1), measuring by a sensor (20) disposed in the engine (1) at least one vibration level value synchronous with said characteristic frequency;
   (b) For at least one module of said engine (1), estimating by data-processing means (31) an unbalance value of said module as a function of the measured vibration level value(s) and of at least one sensitivity coefficient of said module associated with said characteristic frequency, said sensitivity coefficient being a predetermined, non-dimensional parameter, reflecting the perceptive impact of the vibrations caused by an unbalance on people or objects carried by the aircraft (2);
   (c) Estimating by the data-processing means (31) a balancing margin of said module as a function of the unbalance value of said module and a maximum threshold associated with the module;
   (d) Estimating a remaining number of flights of said aircraft (2) before balancing and/or an indicator of quality of a previous balancing as a function of the estimated balancing margin(s) and of data representative of past balancings of the engine (1) stored in a database stored on data-storage means (32), and transmitting to interface means (33).

2. The method according to claim 1, wherein step (a) comprises prior measuring by another sensor (20) disposed in the engine (1) of at least one frequency that is characteristic of the operation of the engine (1).

3. The method according to one of claims 1 and 2, wherein said engine (1) is an at least two-shaft engine having at least two characteristic frequencies including a low-pressure (LP) frequency and a high-pressure (HP) frequency, each balancing being low-pressure balancing and/or high-pressure balancing.

4. The method according to claim 3, wherein the LP frequency is the rotation frequency of a low-pressure assembly of the engine (1) and the HP frequency is the rotation frequency of a high-pressure assembly of the engine (1).

5. The method according to one of claims 3 and 4, wherein each module of the engine (1) is associated with the high-pressure assembly or with the low-pressure assembly, and selected from a fan, at least one turbine, and at least one compressor.

6. The method according to one of claims 1 to 5, wherein each past balancing is associated with an installed unbalance value and a time parameter.

7. The method according to one of claims 1 to 6, wherein said flight of said aircraft (2) comprises a sequence of operational phases of said engine (1), each operational phase having for each characteristic frequency a nominal value and/or a nominal derivative of the characteristic frequency, step (a) comprising the measurement of at least one vibration level value of said engine (1) for at least one of said phases of the operation, the measurement being taken at an instant of said operational phase such that the characteristic frequency has an instantaneous value and/or derivative substantially equal respectively to the nominal value and to the nominal derivative of the characteristic frequency associated with the operational phase.

8. The method according to one of claims 1 to 7, wherein said vibration level value of said module synchronous with said characteristic frequency corresponds to the amplitude of said characteristic frequency in the frequency spectrum of vibration of the engine (1).

9. The method according to one of claims 1 to 8, wherein step (b) comprises sub-steps of:

- For each characteristic frequency, estimating a proportion of unbalance of the module at the characteristic frequency as a function of the measured vibration level values;
- For each characteristic frequency, estimating a level of vibration of the module synchronous with the characteristic frequency;
- For each characteristic frequency, estimating an unbalance level of the module associated with the characteristic frequency;
- Estimating the unbalance value.

10. The method according to claim 9, wherein:

- The level of vibration of the module synchronous with a characteristic frequency is estimated as the product of the measured level of vibration synchronous with the characteristic frequency and the estimated proportion of the unbalance of said module synchronous with the characteristic frequency;
- The unbalance level of the module associated with a characteristic frequency is estimated as the ratio of the level of vibration of said module synchronous with the characteristic frequency over the sensitivity coefficient of said module synchronous with the characteristic frequency;
- The unbalance value is estimated as the average of the unbalance levels of said module associated with each of the characteristic frequencies.

11. Equipment (3) for monitoring, during a flight, an aircraft (2) engine (1) in operation, comprising data-processing means (31), data-storage means (32) storing in a database data representative of past balancings of the engine (1), and interface means (33), the equipment (3) being **characterized in that** the data-processing means (31) are configured to:

- For at least one characteristic frequency of the operation of the engine (1), receive from a sensor (20) disposed in the engine (1) at least one vibration level value synchronous with said characteristic frequency;
- for at least one module of said engine (1), estimate an unbalance value of said module as a function of the measured vibration level value(s) and of at least one sensitivity coefficient of said module associated with said characteristic frequency, said sensitivity coefficient being a predetermined, non-dimensional parameter, reflecting the perceptive impact of the vibrations caused by an unbalance on people or objects carried by the aircraft (2);
- estimate a balancing margin of said module as a function of the unbalance value of said module and of a maximum threshold associated with the module;
- estimate a remaining number of flights of said aircraft (2) before balancing and/or the quality of a previous balancing as a function of the estimated balancing margin(s) and of the data representative of past balancings of the engine (1) stored in a database stored on data-storage means (32),
- transmit to interface means (33).

12. A system comprising:

- an aircraft (2) engine (1) equipped with a sensor (20) for measuring at least one vibration level value synchronous with a characteristic frequency of the engine (1);
- equipment (3) according to claim 11 for monitoring, during a flight, an aircraft (2) engine (1) in operation.

13. A computer program product comprising code instructions which cause the system according to claim 12 to execute the steps of a method according to one of claims 1 to 10 for monitoring, during a flight, an aircraft (2) engine (1) in operation, when said program is executed on a computer.

14. Storage means readable by computer equipment on which the computer program product according to claim 13 is recorded.

# FIG. 1

FIG. 2

Evolution du balourd maximal en vol

EP 3 292 384 B1

## FIG. 3

Très sensible

Peu sensible

zone confort    compromis    zone rentabilité

——— courbe pilote

—·—·—·— courbe passager

- - - - - - - courbe fret

## FIG. 4a

Evolution du balourd & régression linéaire

MilsDA
MilsDA/vol

Nombre de vols

## FIG. 4b

**Suivi de la pente**

Nombre de vols

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2941049 A1
- WO 9534371 A1